# EUROPEAN PATENT SPECIFICATION

(11) **EP 4 690 181 B1**
(45) Date of publication and mention of the grant of the patent: **04.11.2026**
(21) Application number: 24734521.8
(22) Date of filing: 21.05.2024
(51) Int. Cl.: G10L 13/02, G06N 3/045, G06N 3/08, G06N 20/00, G10L 13/08, G10L 15/183, G10L 15/26, G10L 25/30, G06N 3/02, G06F 16/3329, G06F 40/35

(54) **LOW-LATENCY CONVERSATIONAL LARGE LANGUAGE MODELS**
GROSSE KONVERSATIONSSPRACHMODELLE MIT NIEDRIGER LATENZ
GRANDS MODÈLES DE LANGAGE CONVERSATIONNELS À FAIBLE LATENCE

(30) Priority: 25.05.2023 US 202318323992
(43) Date of publication of application: 11.02.2026
(73) Proprietor: Google LLC, Mountain View, CA 94043 (US)
(72) Inventor: MCQUINN, Emmett Aaron, Mountain View, California 94043 (US)
(74) Representative: Marks & Clerk GST
(86) International application number: PCT/US2024/030364
(87) International publication number: WO 2024/243205

(56) References cited:
- WO-A1-2022/093192
- WO-A1-2023/038654
- US-A1- 2022 115 000
- MUYANG DU ET AL: "Efficient Incremental Text-to-Speech on GPUs", ARXIV.ORG, CORNELL UNIVERSITY LIBRARY, 201 OLIN LIBRARY CORNELL UNIVERSITY ITHACA, NY 14853, 5 December 2022 (2022-12-05), XP091385853

## Description

### TECHNICAL FIELD

This disclosure relates to conversational language models and, more particularly, to low-latency conversational large language models.

### BACKGROUND

Automatic speech recognition (ASR) systems and large language models (LLMs) are increasingly used to provide conversational experiences between users and user devices. In general, an ASR system attempts to determine an accurate transcription of what a user utters to a user device, and an LLM generates, based on the transcription, a response to the utterance. In some examples, a text-to-speech (TTS) system provides an audible output by the user device that represents the response generated by the LLM to provide a conversational experience. WO 2023/038654 Al discloses the generation of a set of modified assistant outputs based on a set of assistant outputs using an LLM model in response to a spoken utterance.

### SUMMARY

The present disclosure provides a method and system as defined by the claims.

The details of one or more implementations of the disclosure are set forth in the accompanying drawings and the description below. Other aspects, features, and advantages will be apparent from the description and drawings, and from the claims defining the invention.

### DESCRIPTION OF DRAWINGS

FIG. 1 is a schematic view of an example system including a low-latency conversational system.
FIG. 2 is a flowchart of an exemplary arrangement of operations for a method of operating a low-latency conversational system.
FIG. 3 is a schematic view of an example computing device that may be used to implement the systems and methods described herein.

Like reference symbols in the various drawings indicate like elements.

### DETAILED DESCRIPTION

Automatic speech recognition (ASR) systems and large language models (LLMs) are increasingly used to provide conversational experiences between users and user devices. In general, an ASR system attempts to determine an accurate transcription of what a user utters to a user device, and an LLM generates, based on the transcription and/or unspoken or spoken device context represented as text or embeddings such as a user's location, prior conversation history, address book, on screen summary, etc., a response to the utterance. In some examples, a text-to-speech (TTS) system provides an audible output by the user device that represents the response generated by the LLM to provide a conversational experience. However, LLMs may have tens to hundreds of billions of parameters, which makes them unsuitable for implementation on most user devices, such as smart phones, tablets, digital assistant devices, infotainment systems, watches, wearables, etc. LLMs may be especially unsuitable for battery-powered user devices. Moreover, implementing LLMs on remote servers in the cloud may introduce unacceptable latency and/or jitter, which may interfere with or impede a natural conversational experience. Cloud implementations can see efficiency gains from coalescing multiple simultaneous requests across multiple users into a batch, processing them together on massively parallel hardware not available to a single device.

Recognizing that spoken words and synthesized speech are typically slow (e.g., only a few words per second) relative to the latency associated with a cloud-based LLM, implementations herein are directed toward systems and methods that use a small, low-latency first model executed on a user device (e.g., having fewer than a billion parameters) that may quickly process a transcription of an utterance to generate a first text segment that represents a predicted initial portion of a response to the utterance. The utterance may correspond to a query directed toward the cloud-based LLM. The user device may then immediately start to audibly output a corresponding synthesized speech representation of the initial portion of the response to the query. Because the first model is small (i.e., in terms of computational and memory requirements compared to the cloud-based LLM) and executes on the user device, the audible output of the synthesized speech representation of the initial portion of the response can begin very shortly after the utterance ends, thus, enabling disclosed systems and methods to begin conversationally responding to the utterance with very low latency.

While the user device generates and/or audibly outputs the synthesized speech representation of the initial portion of the response, a much larger second model (e.g., an LLM having hundreds of billions of parameters) executed by a remote computing system in the cloud may process the transcription, the first text segment and, in some examples, additional context to generate a second text segment that represents a remaining portion of the response to the utterance. The first text segment could be transmitted from the user device to the remote computing system in the cloud, or may alternatively be computed on the remote computing system in the cloud to mirror the model output running on the user device. Because, the second model may determine the second text segment while the synthesized speech representation of the initial portion of the response is being generated and/or audibly output, latency and/or jitter associated with generating the second text segment by the second model may be effectively masked by the audible output of the initial portion. Notably, the second model may generate the second text segment such that the remaining portion of the response cohesively, naturally, or logically follows the initial portion of the response already being audibly output by the user device. Alternatively, the second model may interrupt the audible output of the initial portion of the response such that a full response to the utterance need not include all of the initial portion determined by the first model.

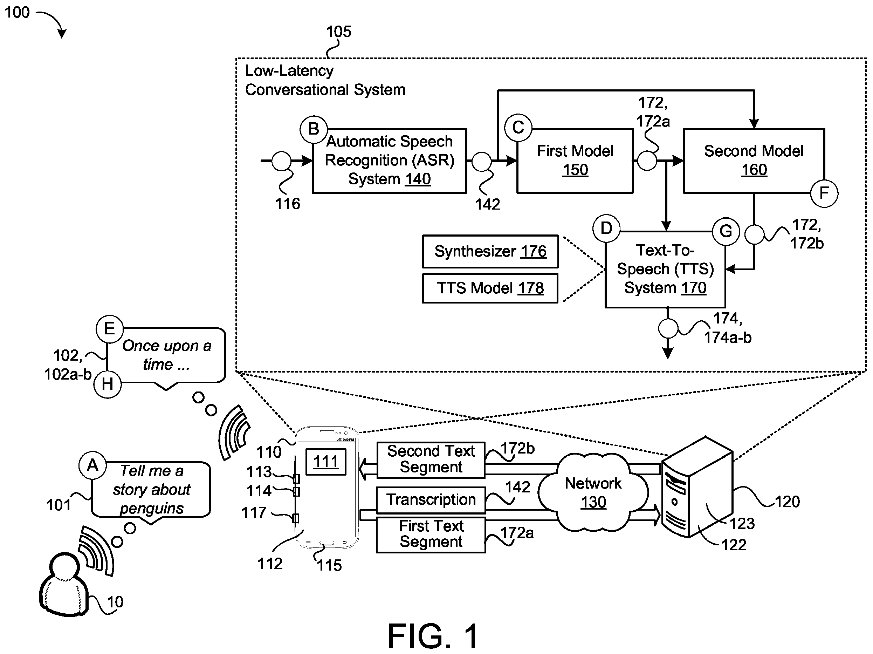

FIG. 1 illustrates an example of a system 100 including a low-latency conversational system 105 for performing automatic speech recognition (ASR) of an utterance 101 spoken by a user 10 of a user device 110, and providing a low-latency response 102 to the utterance 101 to the user 10 via the user device 110. In the example of FIG. 1, the response 102 is audibly output by the user device 110. Additionally or alternatively, a textual representation of the response 102 may be graphically output by a digital assistant application 111 on a display 112 of the user device 110.

The system 100 includes the user device 110, a remote computing system 120, and a network 130. The user device 110 includes data processing hardware 113 and memory hardware 114. The user device 110 may include, or be in communication with, one or more audio capture devices 115 (e.g., an array of one or more microphone(s))for capturing and converting utterances 101 spoken by the user 10 into audio data 116 (e.g., electrical signals or digital data). The user device 110 may include, or be in communication with, one or more audio output devices (e.g., speakers) 117 for converting audio data (e.g., electrical signals or digital data) into audible signals emitted by the speakers 117. The user device 110 may be any computing device capable of communicating with the remote computing system 120 through the network 130. The user device 110 includes, but is not limited to, desktop computing devices and mobile computing devices, such as laptops, tablets, smart phones, smart speakers/displays, digital assistant devices, smart appliances, internet-of-things (IoT) devices, infotainment systems, vehicle infotainment systems, and wearable computing devices (e.g., headsets, smart glasses, and/or watches).

The remote computing system 120 may be a distributed system (e.g., a cloud computing environment) having scalable elastic resources. The resources include computing resources 122 (e.g., data processing hardware) and/or storage resources 123 (e.g., memory hardware). Additionally or alternatively, the remote computing system 120 may be a centralized system. The network 130 may be wired, wireless, or a combination thereof, and may include private networks and/or public networks, such as the Internet.

FIG. 1 shows example operations (A) to (H) which illustrate an example flow of data and an example sequence of operations. As described herein, the user device 110 performs operations (B) to (E), (G), and (H), and the remote computing system 120 performs operation (F). However, it is understood that the remote computing system 120 may also perform operations (B) to (D), (F), and (G) in addition to, or in lieu of, the user device 110 performing the operations.

During stage (A), the user 10 speaks an utterance 101 (i.e., a query), and the user device 110 receives audio data 116 characterizing the utterance 101 captured by the microphone 115 of the user device 110. In the example shown, the utterance 101 includes the user 10 speaking "tell me a story about penguins."

During stage (B), an ASR system 140 of the low-latency conversational system 105 processes the audio data 116 to generate a transcription 142 of the utterance 101. The ASR system 140 may implement any number and/or type(s) of past, current, or future speech recognition systems, models and/or methods including, but not limited to, an end-to-end speech recognition model, such as streaming speech recognition models having recurrent neural network-transducer (RNN-T) model architectures, a hidden Markov model, an acoustic model, a pronunciation model, a language model, and/or a naive Bayes classifier.

During stage (C), a first model 150 of the low-latency conversational system 105 processes the transcription 142 to generate a first text segment 172, 172a that represents a predicted initial portion 102a of a response 102 to the transcription 142 or, more generally, the utterance 101. Other examples inputs to the first model 150 include, but are not limited to, non-textual inputs such context information (e.g., a contact list on the user device 110, what media is currently playing on the user device 110, a location of the user device 110, weather, information associated with a device in communication with the user device 110, user sentiment, etc.) or multi-modal input (images, video, accelerometer, etc). That is, the first model 150 process the transcription 142 to predict one or more initial words (e.g., a first few words) that form the first text segment 172a representing the initial portion 102a of the response 102. The first model 150 may be a small model (e.g., fewer than a billion parameters) that is suitable for execution on the user device 110 to generate initial portions of responses to queries with low/reduced-latency. The first model 150 may be trained to produce just the first text segment 172a that represents the predicted initial portion 102a of the response 102without producing/generating the complete response 102. In some implementations, the first text segment 172a represents a generic phrase, a filler phrase, or a prefix phrase. For example, the first model 150 may be trained to mirror language from the utterance 101 as the first text segment 172a. For instance, in the example of FIG. 1, the utterance 101 starts with "tell me a story about ..." and the first model 150 may be trained to mirror back the phrase "once upon a time ...", such that the first text segment 172a acknowledges the request for a story but is not specific to any particular requested story. Another example utterance 101 starts with "teach me to" and the first model 150 may be trained to mirror back the phrase "I'm a beginner ..." or "sure I can help you learn to ...", such that the first text segment 172a acknowledges the request for information but is not specific to any particular requested information. In some implementations, the first model 150 is configured to select the first text segment 172a from a plurality of pre-determined text segments. In general, the first model 150 may be trained to provide flexibility in the generation of a remaining portion 102b of the response 102 by a second model 160. In the example shown, the first model 150 executes on the user device 110 and the second model 160 executes on the remote computing system 120. However, both the first model 150 and the second model 160 may execute on the remote computing system 120. Moreover, both the first model 150 and the second model 160 may execute on the user device 110.

In some implementations, the first model 150 selects the length of the first text segment 172a such that a synthesized speech representation 174, 174a generated from the first text segment 172a includes a duration sufficient to mask (e.g., is longer than) an anticipated latency or jitter time period incurred while the second model 160 executing on the remote computing system 120 processes the transcription 142 and first text segment 172a to generate the second text segment 172b. Here, the length of the first text segment 172a may be pre-determined. Alternatively, the first model 150 may dynamically determine the length of the first text segment 172a based on actual latencies associated with the second model 160 for other recent utterances 101, which may vary with, for example, a processing load of the remote computing system 120 executing the second model 160, a transmission delay in the network 130, etc.

In some examples, the first model 150 includes a language model or an LLM, albeit having fewer parameters than an LLM corresponding to the second model 160. In such examples, the first model 150 could be a first LLM associated with a scaled down parameter count version of a second LLM that corresponds to the second model 160. Alternatively, a language model or an LLM of the first model 150 may be trained separately and differently from the second model 160 on a task that only includes predicting the initial portion 102a of a response 102. Notably, separate training of the first model 150 and the second model 160 may better enable the second model 160 to recover from errors of the first model 150 in generating the first text segment 172a. Alternatively, the first model 150 may include an embedding model that projects the transcription 142 into an embedding space corresponding to a plurality of pre-determined first text segments. Alternatively, the first model 150 may include a classifier model configured to select, based on the transcription 142, the first text segment 172a from a plurality of pre-determined first text segments. Alternatively, the first model 150 may include a natural language processing/understanding (NLP/NLU) module. In some implementations, the ASR system 140 and the first model 150 are combined into and trained as a single system or model.

During stage (D), a text-to-speech (TTS) system 170 of the low-latency conversational system 105 processes the first text segment 172a to generate a first synthesized speech representation 174, 174a of the initial portion 102a of the response 102. The TTS system 170 may implement any number and/or type(s) of past, current, or future TTS systems, models and/or methods capable of processing a text segment 172 to generate a corresponding synthesized speech representation 174. Example TTS systems 170 include, but are not limited to, a parametric TTS model and a deep neural network (e.g., an attention-based Tacotron network). In some implementations, the TTS system 170 includes a TTS model 178, that generates synthesized speech features (e.g., mel-spectrogram frames), and a synthesizer 176 (e.g., a vocoder, or generative neural network), that processes the synthesized speech features to generate the synthesized speech representations 174 as time-domain audio waveforms (e.g., time-domain audio waveforms that define an audio signal's amplitude over time) that can be audibly emitted by the speaker(s) 117 of the user device 110. In some implementations, the TTS system 170 includes the synthesizer 176 and the TTS model 178. However, the synthesizer 176 may be implemented separately from the TTS system 170 and also used for other purposes. Alternatively, synthesized speech representations 174 for pre-determined first text segments could be pre-computed and stored on the user device 110 or the remote computing system 120 for retrieval. In some examples, the TTS system 170 generates the synthesized speech representation 174 based on other inputs, such as, a prosody, a speaking rate, an emotion as represented by, for example, tokens, emojis, and text prompts.

During stage (E), the first synthesized speech representation 174a is provided for audible output by the speaker 117 of the user device 110, as the initial portion 102a of the response 102. Additionally or alternatively, during stage (E), the initial portion 102a of the response 102 is textually output by the digital assistant application 111 on the display 112 of the user device 110.

In some implementations, when the transcription 142 of the utterance 101 includes a query requiring an Internet search ("who is Jane Smith"), the user device 110 may bypass processing of the transcription 142 by the first model 150 and directly generate the first synthesized speech representation 174a. In this scenario, the second model 160 may be responsible for generating the complete response 102.

During stage (F), in the example shown, the user device 110 provides the transcription 142 and the first text segment 172a to the second model 160 executing on the remote computing system 120. Notably, the second model 160 is different and separate from the first model 150. The second model 160 processes the transcription 142 and the first text segment 172a to generate a second text segment 172b that represents a remaining portion 102b of the response 102. Here, the second model 160 generates the second text segment 172b to naturally or logically follow the first text segment 172a. That is, the second model 160 blends the second text segment 172b with the first text segment 172a to generate a cohesive complete response 102. In some implementations, the second model 160 is trained to generate the second text segment 172b by generating a complete response to the transcript 142 and then discarding the first text segment 172a.

In some examples, the second model 160 includes the LLM. In some implementations, the second model 160 is trained on training transcriptions characterizing training queries, where each training transcription corresponds to a respective query and is paired with a corresponding ground-truth complete response to the respective query. Here, the ground-truth complete response may include a corresponding ground-truth initial response portion (e.g., one of a plurality of predetermined first text segments) to the respective query to condition the second model 160 to learn how to generate a corresponding ground-truth remaining response portion (e.g., a second text segment) that incorporates the corresponding ground-truth initial response portion. Alternatively, the second model 160 may be prompted to generate the remaining response portion starting with the first text segment 172a.

In some implementations, the second model 160 causes the user device 110 to discontinue, at stage (E), the providing, for audible output, a remaining portion of the first synthesized speech representation 174a. For example, when the second model 160 determines that it cannot generate a suitable second text segment 172b that cohesively, naturally, or logically follows the first text segment 172a.

In some instances, when the second model 160 is not available (e.g., due to a network failure), the user device 110 may provide, for audible output by the speaker 117, a synthesized speech representation of a pre-determined phrase such as "Sorry, I'm not thinking clearly right now because I am disconnected from the Internet. Let's try again soon." Similarly, when the second model 160 is experiencing a longer than expected latency, the user device 110 may provide, for audible output by the speaker 117, a synthesized speech representation of a pre-determined phrase such as "Please wait while I further consider your query." Moreover, when the second model 160 does not timely respond to a query and there is still time remaining while audibly outputting the first synthesized speech representation 174a of the initial portion of the response, the user device 110 may resend the query to the second model 160.

During stage (G), the user device 110 obtains a second synthesized speech representation 174b representing the remaining portion 102b of the response 102 by receiving the second text segment 172b from the remote computing system 120 and executing the TTS system 170 locally to convert the second text segment 172b into the second synthesized speech representation 174b. Alternatively, the user device 110 obtains the second synthesized speech representation 174b by receiving the second synthesized speech representation 174b directly from the remote computing system 120, whereby the remote computing system 120 executes the TTS system 170 to generate the second synthesized speech representation 174b from the second text segment 172b. Here, the second synthesized speech representation 174b received from the remote computing system 120 may include time-domain audio waveforms (e.g., as streaming audio data or a compressed audio file). Optionally, the remote computing system 120 may execute the TTS model 178 of the TTS system 170 to convert the second text segment 172b into a sequence of speech features in the frequency-domain, such as spectrograms, and transmit the speech features to the user device 110 which may execute the synthesizer 176 (e.g., vocoder) to convert the speech features into time-domain audio waveforms corresponding to the second synthesized speech representation 174b.

During stage (H), the second synthesized speech representation 174b is provided for audible output by the speaker(s) 117 of the user device 110, as the remaining portion 102b of the response 102. Additionally or alternatively, during stage (H), the second text segment 172b representing the remaining portion 102b of the response 102 is graphically output by the digital assistant application 111 on the display 112 of the user device 110. The display 112 may include a graphical user interface.

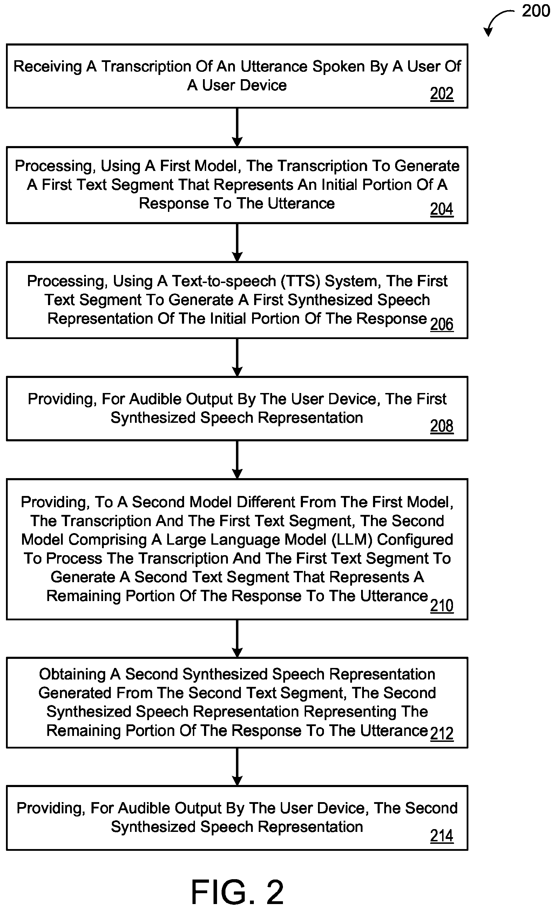

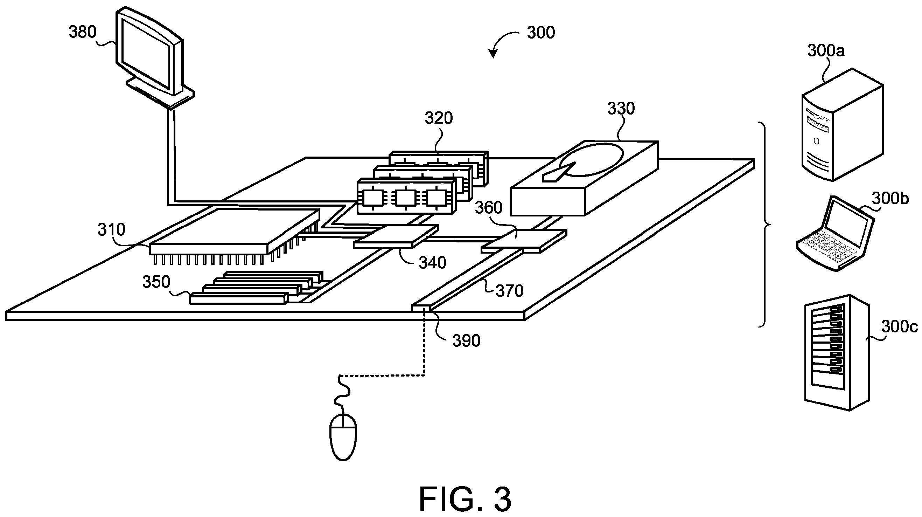

FIG. 2 is a flowchart of an exemplary arrangement of operations for a method 200 of operating a low-latency conversational system. The operations may execute on data processing hardware 310 (FIG. 3) by executing instructions stored on memory hardware 320 in communication with the data processing hardware 320. The data processing hardware 310 may include the data processing hardware 113 (FIG. 1) of the user device 110 and/or the data processing hardware 122 (FIG. 1) of the remote computing system 120. The memory hardware 320 may include the data memory hardware 114 (FIG. 1) of the user device 110 and/or the memory hardware 123 of the remote computing system 120.

At operation 202, the method 200 includes receiving a transcription 142 of an utterance 101 spoken by a user 10 of a user device 110. The utterance 101 may correspond to a query directed toward a LLM. The method 200 includes, at operation 204, processing, using a first model 150, the transcription 142 to generate a first text segment 172a that represents an initial portion 102a of a response 102 to the utterance 101. At operation 206, the method 200 includes processing, using a TTS system 170, the first text segment 172a to generate a first synthesized speech representation 174a of the initial portion 102a of the response 102 to the utterance 101. At operation 208, the method 200 includes providing, for audible output by the user device 110, the first synthesized speech representation 174a.

At operation 210, the method 200 includes providing, to a second model 160 different from the first model 150, the transcription 142 and the first text segment 172a. The second model 160 includes the LLM configured to process the transcription 142 and the first text segment 172a to generate a second text segment 172b that represents a remaining portion 102b of the response 102 to the utterance 101.

At operation 212, the method 200 includes obtaining a second synthesized speech representation 174b generated from the second text segment 172b, the second synthesized speech representation 174b representing the remaining portion 102b of the response 102 to the utterance 101. The method 200 includes, at operation 214, providing, for audible output by the user device 110, the second synthesized speech representation 174b.

FIG. 3 is schematic view of an example computing device 300 that may be used to implement the systems and methods described in this document. The computing device 300 is intended to represent various forms of digital computers, such as laptops, desktops, workstations, personal digital assistants, servers, blade servers, mainframes, and other appropriate computers. The components shown here, their connections and relationships, and their functions, are meant to be exemplary only, and are not meant to limit implementations of the inventions described and/or claimed in this document.

The computing device 300 includes a processor 310 (i.e., data processing hardware) that can be used to implement the data processing hardware 113 and/or 122, memory 320 (i.e., memory hardware) that can be used to implement the memory hardware 114 and/or 123, a storage device 330 (i.e., memory hardware) that can be used to implement the memory hardware 114 and/or 123, a high-speed interface/controller 340 connecting to the memory 320 and high-speed expansion ports 350, and a low speed interface/controller 360 connecting to a low speed bus 370 and a storage device 330. Each of the components 310, 320, 330, 340, 350, and 360, are interconnected using various busses, and may be mounted on a common motherboard or in other manners as appropriate. The processor 310 can process instructions for execution within the computing device 300, including instructions stored in the memory 320 or on the storage device 330 to display graphical information for a graphical user interface (GUI) on an external input/output device, such as display 380 coupled to high speed interface 340. In other implementations, multiple processors and/or multiple buses may be used, as appropriate, along with multiple memories and types of memory. Also, multiple computing devices 300 may be connected, with each device providing portions of the necessary operations (e.g., as a server bank, a group of blade servers, or a multi-processor system).

The memory 320 stores information non-transitorily within the computing device 300. The memory 320 may be a computer-readable medium, a volatile memory unit(s), or non-volatile memory unit(s). The non-transitory memory 320 may be physical devices used to store programs (e.g., sequences of instructions) or data (e.g., program state information) on a temporary or permanent basis for use by the computing device 300. Examples of non-volatile memory include, but are not limited to, flash memory and read-only memory (ROM) / programmable read-only memory (PROM) / erasable programmable read-only memory (EPROM) / electronically erasable programmable read-only memory (EEPROM) (e.g., typically used for firmware, such as boot programs). Examples of volatile memory include, but are not limited to, random access memory (RAM), dynamic random access memory (DRAM), static random access memory (SRAM), phase change memory (PCM) as well as disks or tapes.

The storage device 330 is capable of providing mass storage for the computing device 300. In some implementations, the storage device 330 is a computer-readable medium. In various different implementations, the storage device 330 may be a floppy disk device, a hard disk device, an optical disk device, or a tape device, a flash memory or other similar solid state memory device, or an array of devices, including devices in a storage area network or other configurations. In additional implementations, a computer program product is tangibly embodied in an information carrier. The computer program product contains instructions that, when executed, perform one or more methods, such as those described above. The information carrier is a computer- or machine-readable medium, such as the memory 320, the storage device 330, or memory on processor 310.

The high speed controller 340 manages bandwidth-intensive operations for the computing device 300, while the low speed controller 360 manages lower bandwidth-intensive operations. Such allocation of duties is exemplary only. In some implementations, the high-speed controller 340 is coupled to the memory 320, the display 380 (e.g., through a graphics processor or accelerator), and to the high-speed expansion ports 350, which may accept various expansion cards (not shown). In some implementations, the low-speed controller 360 is coupled to the storage device 330 and a low-speed expansion port 390. The low-speed expansion port 390, which may include various communication ports (e.g., USB, Bluetooth, Ethernet, wireless Ethernet), may be coupled to one or more input/output devices, such as a keyboard, a pointing device, a scanner, or a networking device such as a switch or router, e.g., through a network adapter.

The computing device 300 may be implemented in a number of different forms, as shown in the figure. For example, it may be implemented as a standard server 300a or multiple times in a group of such servers 300a, as a laptop computer 300b, or as part of a rack server system 300c.

Various implementations of the systems and techniques described herein can be realized in digital electronic and/or optical circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

A software application (i.e., a software resource) may refer to computer software that causes a computing device to perform a task. In some examples, a software application may be referred to as an "application," an "app," or a "program." Example applications include, but are not limited to, system diagnostic applications, system management applications, system maintenance applications, word processing applications, spreadsheet applications, messaging applications, media streaming applications, social networking applications, and gaming applications.

These computer programs (also known as programs, software, software applications, or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, non-transitory computer readable medium, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

The processes and logic flows described in this specification can be performed by one or more programmable processors, also referred to as data processing hardware, executing one or more computer programs to perform functions by operating on input data and generating output. The processes and logic flows can also be performed by special purpose logic circuitry, e.g., an FPGA (field programmable gate array) or an ASIC (application specific integrated circuit). Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, one or more aspects of the disclosure can be implemented on a computer having a display device, e.g., a CRT (cathode ray tube), LCD (liquid crystal display) monitor, or touch screen for displaying information to the user and optionally a keyboard and a pointing device, e.g., a mouse or a trackball, by which the user can provide input to the computer. Other kinds of devices can be used to provide interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Unless expressly stated to the contrary, the phrase "at least one of A, B, or C" is intended to refer to any combination or subset of A, B, C such as: (1) at least one A alone; (2) at least one B alone; (3) at least one C alone; (4) at least one A with at least one B; (5) at least one A with at least one C; (6) at least one B with at least C; and (7) at least one A with at least one B and at least one C. Moreover, unless expressly stated to the contrary, the phrase "at least one of A, B, and C" is intended to refer to any combination or subset of A, B, C such as: (1) at least one A alone; (2) at least one B alone; (3) at least one C alone; (4) at least one A with at least one B; (5) at least one A with at least one C; (6) at least one B with at least one C; and (7) at least one A with at least one B and at least one C. Furthermore, unless expressly stated to the contrary, "A or B" is intended to refer to any combination of A and B, such as: (1) A alone; (2) B alone; and (3) A and B.

A number of implementations have been described. Nevertheless, it will be understood that various modifications may be made without departing from the scope of the following claims.

## Claims

1. A computer-implemented method (200) comprising:
receiving a transcription (142) of an utterance (101) spoken by a user of a user device (110);
processing, using a first model (150), the transcription (142) to generate a first text segment (172) that represents an initial portion of a response (102) to the utterance (101);
processing, using a text-to-speech system (170), the first text segment (172) to generate a first synthesized speech representation (174) of the initial portion of the response (102) to the utterance (101);
providing, for audible output by the user device (110), the first synthesized speech representation (174);
providing, to a second model (160) different from the first model (150), the transcription (142) and the first text segment (172), the second model (160) comprising a large language model (LLM) configured to process the transcription (142) and the first text segment (172) to generate a second text segment (172) that represents a remaining portion of the response (102) to the utterance (101);
obtaining a second synthesized speech representation (174) generated from the second text segment (172), the second synthesized speech representation (174) representing the remaining portion of the response (102) to the utterance (101); and
providing, for audible output from the user device (110), the second synthesized speech representation (174); and,
wherein the first synthesized speech representation (174) is provided for audible output while at least one of providing the transcription (142) and the first text segment (172) to the second model (160) or obtaining the second synthesized speech representation (174).

2. The computer-implemented method (200) of claim 1, wherein the operations further comprise:
receiving audio data (116) characterizing the utterance (101), the audio data (116) captured by the user device (110); and
processing, using an automatic speech recognition system (140), the audio data (116) to generate the transcription (142).

3. The computer-implemented method (200) of claim 1 or 2, wherein either:
the data processing hardware (310) resides on the user device (110);
the first model (150) executes on the data processing hardware (310); and
the second model (160) executes on a remote computing system (120) in communication with the data processing hardware (310); or,
wherein:
the data processing hardware (310) resides on a remote computing system (120) in communication with the user device (110); and
the first model (150) and the second model (160) both execute on the data processing hardware (310).

4. The computer-implemented method (200) of any of claims 1-3, wherein the second model (160) is trained on training transcriptions, each training transcription (142) paired with a corresponding training initial response portion to condition the second model (160) to learn how to generate a response (102) to the training transcription (142) that incorporates the corresponding training initial response portion.

5. The computer-implemented method (200) of any of claims 1-4, wherein the first model (150) is trained to generate the first text segment (172) of one or more initial words in the response (102) to the transcription (142) such that the first synthesized speech representation (174) generated from the one or more initial words includes a duration sufficient to mask a latency time period incurred while the second model (160) processes the transcription (142) and the first text segment (172) to generate the second text segment (172); and optionally,
wherein the one or more initial words represent at least one of a generic phrase, a filler phrase, or a prefix phrase.

6. The computer-implemented method (200) of any of claims 1-5, wherein the first model (150) comprises a classifier model configured to select, based on the transcription (142), the first text segment (172) from a plurality of pre-determined text segments (172); and/or,
wherein:
the first model (150) comprises a first LLM; and
the LLM of the second model (160) comprises a second LLM having a greater number of parameters than the first LLM.

7. The computer-implemented method (200) of any of claims 1-6, wherein the first model (150) comprises an embedding model configured to project the transcription (142) into an embedding space corresponding to a plurality of pre-determined first text segments (172); and/or,
wherein providing, for audible output from the user device (110), the second synthesized speech representation (174) comprises discontinuing providing, for audible output by the user device (110), a remaining portion of the first synthesized speech representation (174).

8. A system (100) comprising:
data processing hardware (310); and
memory hardware (320) in communication with the data processing hardware (310) and storing instructions that when executed on the data processing hardware (310) cause the data processing hardware (310) to perform a method comprising:
receiving a transcription (142) of an utterance (101) spoken by a user of a user device (110);
processing, using a first model (150), the transcription (142) to generate a first text segment (172) that represents an initial portion of a response (102) to the utterance (101);
processing, using a text-to-speech system (170), the first text segment (172) to generate a first synthesized speech representation (174) of the initial portion of the response (102) to the utterance (101);
providing, for audible output by the user device (110), the first synthesized speech representation (174);
providing, to a second model (160) different from the first model (150), the transcription (142) and the first text segment (172), the second model (160) comprising a large language model (LLM) configured to process the transcription (142) and the first text segment (172) to generate a second text segment (172) that represents a remaining portion of the response (102) to the utterance (101);
obtaining a second synthesized speech representation (174) generated from the second text segment (172), the second synthesized speech representation (174) representing the remaining portion of the response (102) to the utterance (101); and
providing, for audible output from the user device (110), the second synthesized speech representation (174); and,
wherein the first synthesized speech representation (174) is provided for audible output while at least one of providing the transcription (142) and the first text segment (172) to the second model (160) or obtaining the second synthesized speech representation (174).

9. The system (100) of claim 8, wherein the operations further comprise:
receiving audio data (116) characterizing the utterance (101), the audio data (116) captured by the user device (110); and
processing, using an automatic speech recognition system, the audio data (116) to generate the transcription (142).

10. The system (100) of claim 8 or 9, wherein either:
the data processing hardware (310) resides on the user device (110);
the first model (150) executes on the data processing hardware (310); and
the second model (160) executes on a remote computing system (120) in communication with the data processing hardware (310); or,
wherein:
the data processing hardware (310) resides on a remote computing system (120) in communication with the data processing hardware (310); and
the first model (150) and the second model (160) both execute on the data processing hardware (310).

11. The system (100) of any of claims 8-10, wherein the second model (160) is trained on training transcriptions, each training transcription (142) paired with a corresponding training initial response portion to condition the second model (160) to learn how to generate a response (102) to the training transcription (142) that incorporates the corresponding training initial response portion.

12. The system (100) of any of claims 8-11, wherein the first model (150) is trained to generate the first text segment (172) of one or more initial words in the response (102) to the transcription (142) such that the first synthesized speech representation (174) generated from the one or more initial words includes a duration sufficient to mask a latency time period incurred while the second model (160) processes the transcription (142) and the first text segment (172) to generate the second text segment (172); and, optionally,
wherein the one or more initial words represent at least one of a generic phrase, a filler phrase, or a prefix phrase.

13. The system (100) of any of claims 8-12, wherein the first model (150) comprises a classifier model configured to select, based on the transcription (142), the first text segment (172) from a plurality of pre-determined text segments (172); and/or,
wherein:
the first model (150) comprises a first LLM; and
the LLM of the second model (160) comprises a second LLM having a greater number of parameters than the first LLM.

14. The system (100) of any of claims 8-13, wherein the first model (150) comprises an embedding model configured to project the transcription (142) into an embedding space corresponding to a plurality of pre-determined first text segments (172).

15. The system (100) of any of claims 8-14, wherein providing, for audible output by the user device (110), the second synthesized speech representation (174) comprises discontinuing providing, for audible output by the user device (110), a remaining portion of the first synthesized speech representation (174).

## Patentansprüche

1. Computerimplementiertes Verfahren (200), umfassend:
Empfangen einer Transkription (142) einer Äußerung (101), die von einem Benutzer einer Benutzervorrichtung (110) gesprochen wird;
Verarbeiten, unter Verwendung eines ersten Modells (150), der Transkription (142), um ein erstes Textsegment (172) zu erzeugen, das einen Anfangsabschnitt einer Antwort (102) auf die Äußerung (101) darstellt;
Verarbeiten, unter Verwendung eines Text-to-Speech-Systems (170), des ersten Textsegments (172), um eine erste synthetisierte Sprachdarstellung (174) des Anfangsabschnitts der Antwort (102) auf die Äußerung (101) zu erzeugen;
Bereitstellen, zur hörbaren Ausgabe durch die Benutzervorrichtung (110), der ersten synthetisierten Sprachdarstellung (174);
Bereitstellen, an ein zweites Modell (160), das sich von dem ersten Modell (150) unterscheidet, der Transkription (142) und des ersten Textsegments (172), wobei das zweite Modell (160) ein großes Sprachmodell (LLM) umfasst, das konfiguriert ist, die Transkription (142) und das erste Textsegment (172) zu verarbeiten, um ein zweites Textsegment (172) zu erzeugen, das einen verbleibenden Abschnitt der Antwort (102) auf die Äußerung (101) darstellt;
Erhalten einer zweiten synthetisierten Sprachdarstellung (174), die aus dem zweiten Textsegment (172) erzeugt wird, wobei die zweite synthetisierte Sprachdarstellung (174) den verbleibenden Abschnitt der Antwort (102) auf die Äußerung (101) darstellt; und
Bereitstellen, zur hörbaren Ausgabe von der Benutzervorrichtung (110), der zweiten synthetisierten Sprachdarstellung (174); und,
wobei die erste synthetisierte Sprachdarstellung (174) zur hörbaren Ausgabe bereitgestellt wird, während mindestens eines von Bereitstellen der Transkription (142) und des ersten Textsegments (172) an das zweite Modell (160) oder Erhalten der zweiten synthetisierten Sprachdarstellung (174) erfolgt.

2. Computerimplementiertes Verfahren (200) nach Anspruch 1, wobei die Operationen ferner umfassen:
Empfangen von Audiodaten (116), die die Äußerung (101) charakterisieren, wobei die Audiodaten (116) von der Benutzervorrichtung (110) erfasst werden; und
Verarbeiten, unter Verwendung eines automatischen Spracherkennungssystems (140), der Audiodaten (116), um die Transkription (142) zu erzeugen.

3. Computerimplementiertes Verfahren (200) nach Anspruch 1 oder 2, wobei entweder:
die Datenverarbeitungshardware (310) auf der Benutzervorrichtung (110) residiert;
das erste Modell (150) auf der Datenverarbeitungshardware (310) ausgeführt wird; und
das zweite Modell (160) auf einem entfernten Rechensystem (120) in Kommunikation mit der Datenverarbeitungshardware (310) ausgeführt wird; oder,
wobei:
die Datenverarbeitungshardware (310) auf einem entfernten Rechensystem (120) in Kommunikation mit der Benutzervorrichtung (110) residiert; und
das erste Modell (150) und das zweite Modell (160) beide auf der Datenverarbeitungshardware (310) ausgeführt werden.

4. Computerimplementiertes Verfahren (200) nach einem der Ansprüche 1-3, wobei das zweite Modell (160) auf Trainingstranskriptionen trainiert ist, wobei jede Trainingstranskription (142) mit einem entsprechenden anfänglichen Trainingsantwortabschnitt gepaart ist, um das zweite Modell (160) zu konditionieren, zu lernen, wie eine Antwort (102) auf die Trainingstranskription (142) zu erzeugen ist, die den entsprechenden anfänglichen Trainingsantwortabschnitt einbezieht.

5. Computerimplementiertes Verfahren (200) nach einem der Ansprüche 1-4, wobei das erste Modell (150) trainiert ist, das erste Textsegment (172) von einem oder mehreren Anfangswörtern in der Antwort (102) auf die Transkription (142) zu erzeugen, sodass die erste synthetisierte Sprachdarstellung (174), die aus dem einen oder den mehreren Anfangswörtern erzeugt wird, eine Dauer beinhaltet, die ausreicht, um einen Latenzzeitraum zu maskieren, der anfällt, während das zweite Modell (160) die Transkription (142) und das erste Textsegment (172) verarbeitet, um das zweite Textsegment (172) zu erzeugen; und optional,
wobei das eine oder die mehreren Anfangswörter mindestens eine von einer allgemeinen Phrase, einer Füllphrase oder einer Präfixphrase darstellen.

6. Computerimplementiertes Verfahren (200) nach einem der Ansprüche 1-5, wobei das erste Modell (150) ein Klassifikatormodell umfasst, das konfiguriert ist, basierend auf der Transkription (142), das erste Textsegment (172) aus einer Mehrzahl von vorbestimmten Textsegmenten (172) auszuwählen; und/oder,
wobei:
das erste Modell (150) ein erstes LLM umfasst; und
das LLM des zweiten Modells (160) ein zweites LLM umfasst, das eine größere Anzahl von Parametern als das erste LLM aufweist.

7. Computerimplementiertes Verfahren (200) nach einem der Ansprüche 1-6, wobei das erste Modell (150) ein Einbettungsmodell umfasst, das konfiguriert ist, die Transkription (142) in einen Einbettungsraum zu projizieren, der einer Mehrzahl von vorbestimmten ersten Textsegmenten (172) entspricht; und/oder,
wobei Bereitstellen, zur hörbaren Ausgabe von der Benutzervorrichtung (110), der zweiten synthetisierten Sprachdarstellung (174) Einstellen von Bereitstellen, zur hörbaren Ausgabe durch die Benutzervorrichtung (110), eines verbleibenden Abschnitts der ersten synthetisierten Sprachdarstellung (174) umfasst.

8. System (100), umfassend:
Datenverarbeitungshardware (310); und
Speicherhardware (320) in Kommunikation mit der Datenverarbeitungshardware (310), die Anweisungen speichert, die, wenn sie auf der Datenverarbeitungshardware (310) ausgeführt werden, die Datenverarbeitungshardware (310) veranlassen, ein Verfahren durchzuführen, umfassend:
Empfangen einer Transkription (142) einer Äußerung (101), die von einem Benutzer einer Benutzervorrichtung (110) gesprochen wird;
Verarbeiten, unter Verwendung eines ersten Modells (150), der Transkription (142), um ein erstes Textsegment (172) zu erzeugen, das einen Anfangsabschnitt einer Antwort (102) auf die Äußerung (101) darstellt;
Verarbeiten, unter Verwendung eines Text-to-Speech-Systems (170), des ersten Textsegments (172), um eine erste synthetisierte Sprachdarstellung (174) des Anfangsabschnitts der Antwort (102) auf die Äußerung (101) zu erzeugen;
Bereitstellen, zur hörbaren Ausgabe durch die Benutzervorrichtung (110), der ersten synthetisierten Sprachdarstellung (174);
Bereitstellen, an ein zweites Modell (160), das sich von dem ersten Modell (150) unterscheidet, der Transkription (142) und des ersten Textsegments (172), wobei das zweite Modell (160) ein großes Sprachmodell (LLM) umfasst, das konfiguriert ist, die Transkription (142) und das erste Textsegment (172) zu verarbeiten, um ein zweites Textsegment (172) zu erzeugen, das einen verbleibenden Abschnitt der Antwort (102) auf die Äußerung (101) darstellt;
Erhalten einer zweiten synthetisierten Sprachdarstellung (174), die aus dem zweiten Textsegment (172) erzeugt wird, wobei die zweite synthetisierte Sprachdarstellung (174) den verbleibenden Abschnitt der Antwort (102) auf die Äußerung (101) darstellt; und
Bereitstellen, zur hörbaren Ausgabe von der Benutzervorrichtung (110), der zweiten synthetisierten Sprachdarstellung (174); und,
wobei die erste synthetisierte Sprachdarstellung (174) zur hörbaren Ausgabe bereitgestellt wird, während mindestens eines von Bereitstellen der Transkription (142) und des ersten Textsegments (172) an das zweite Modell (160) oder Erhalten der zweiten synthetisierten Sprachdarstellung (174) erfolgt.

9. System (100) nach Anspruch 8, wobei die Operationen ferner umfassen:
Empfangen von Audiodaten (116), die die Äußerung (101) charakterisieren, wobei die Audiodaten (116) von der Benutzervorrichtung (110) erfasst werden; und
Verarbeiten, unter Verwendung eines automatischen Spracherkennungssystems, der Audiodaten (116), um die Transkription (142) zu erzeugen.

10. System (100) nach Anspruch 8 oder 9, wobei entweder:
die Datenverarbeitungshardware (310) auf der Benutzervorrichtung (110) residiert;
das erste Modell (150) auf der Datenverarbeitungshardware (310) ausgeführt wird; und
das zweite Modell (160) auf einem entfernten Rechensystem (120) in Kommunikation mit der Datenverarbeitungshardware (310) ausgeführt wird; oder,
wobei:
die Datenverarbeitungshardware (310) auf einem entfernten Rechensystem (120) in Kommunikation mit der Datenverarbeitungshardware (310) residiert; und
das erste Modell (150) und das zweite Modell (160) beide auf der Datenverarbeitungshardware (310) ausgeführt werden.

11. System (100) nach einem der Ansprüche 8-10, wobei das zweite Modell (160) auf Trainingstranskriptionen trainiert ist, wobei jede Trainingstranskription (142) mit einem entsprechenden anfänglichen Trainingsantwortabschnitt gepaart ist, um das zweite Modell (160) zu konditionieren, zu lernen, wie eine Antwort (102) auf die Trainingstranskription (142) zu erzeugen ist, die den entsprechenden anfänglichen Trainingsantwortabschnitt einbezieht.

12. System (100) nach einem der Ansprüche 8-11, wobei das erste Modell (150) trainiert ist, das erste Textsegment (172) von einem oder mehreren Anfangswörtern in der Antwort (102) auf die Transkription (142) zu erzeugen, sodass die erste synthetisierte Sprachdarstellung (174), die aus dem einen oder den mehreren Anfangswörtern erzeugt wird, eine Dauer beinhaltet, die ausreicht, um einen Latenzzeitraum zu maskieren, der anfällt, während das zweite Modell (160) die Transkription (142) und das erste Textsegment (172) verarbeitet, um das zweite Textsegment (172) zu erzeugen; und, optional,
wobei das eine oder die mehreren Anfangswörter mindestens eine von einer allgemeinen Phrase, einer Füllphrase oder einer Präfixphrase darstellen.

13. System (100) nach einem der Ansprüche 8-12, wobei das erste Modell (150) ein Klassifikatormodell umfasst, das konfiguriert ist, basierend auf der Transkription (142), das erste Textsegment (172) aus einer Mehrzahl von vorbestimmten Textsegmenten (172) auszuwählen; und/oder,
wobei:
das erste Modell (150) ein erstes LLM umfasst; und
das LLM des zweiten Modells (160) ein zweites LLM umfasst, das eine größere Anzahl von Parametern als das erste LLM aufweist.

14. System (100) nach einem der Ansprüche 8-13, wobei das erste Modell (150) ein Einbettungsmodell umfasst, das konfiguriert ist, die Transkription (142) in einen Einbettungsraum zu projizieren, der einer Mehrzahl von vorbestimmten ersten Textsegmenten (172) entspricht.

15. System (100) nach einem der Ansprüche 8-14, wobei Bereitstellen, zur hörbaren Ausgabe durch die Benutzervorrichtung (110), der zweiten synthetisierten Sprachdarstellung (174) Einstellen von Bereitstellen, zur hörbaren Ausgabe durch die Benutzervorrichtung (110), eines verbleibenden Abschnitts der ersten synthetisierten Sprachdarstellung (174) umfasst.

## Revendications

1. Procédé mis en œuvre par ordinateur (200)
comprenant :
la réception d'une transcription (142) d'un énoncé (101) prononcé par un utilisateur d'un dispositif utilisateur (110) ;
le traitement, à l'aide d'un premier modèle (150), de la transcription (142) pour générer un premier segment de texte (172) qui représente une partie initiale d'une réponse (102) à l'énoncé (101) ;
le traitement, à l'aide d'un système de synthèse vocale (170), du premier segment de texte (172) pour générer une première représentation vocale synthétisée (174) de la partie initiale de la réponse (102) à l'énoncé (101) ;
la fourniture, pour sortie audible par le dispositif utilisateur (110), de la première représentation vocale synthétisée (174) ;
la fourniture, à un second modèle (160) différent du premier modèle (150), de la transcription (142) et du premier segment de texte (172), le second modèle (160) comprenant un grand modèle de langage (LLM) configuré pour traiter la transcription (142) et le premier segment de texte (172) pour générer un second segment de texte (172) qui représente une partie restante de la réponse (102) à l'énoncé (101) ;
l'obtention d'une seconde représentation vocale synthétisée (174) générée à partir du second segment de texte (172), la seconde représentation vocale synthétisée (174) représentant la partie restante de la réponse (102) à l'énoncé (101) ; et
la fourniture, pour sortie audible depuis le dispositif utilisateur (110), de la seconde représentation vocale synthétisée (174) ; et,
dans lequel la première représentation vocale synthétisée (174) est fournie pour sortie audible pendant qu'au moins l'une des actions suivantes est effectuée : la fourniture de la transcription (142) et du premier segment de texte (172) au second modèle (160) ou l'obtention de la seconde représentation vocale synthétisée (174).

2. Procédé mis en œuvre par ordinateur (200) selon la revendication 1, dans lequel les opérations comprennent en outre :
la réception de données audio (116) caractérisant l'énoncé (101), les données audio (116) étant capturées par le dispositif utilisateur (110) ; et
le traitement, à l'aide d'un système de reconnaissance vocale automatique (140), des données audio (116) pour générer la transcription (142).

3. Procédé mis en œuvre par ordinateur (200) selon la revendication 1 ou 2, dans lequel soit :
le matériel de traitement de données (310) réside sur le dispositif utilisateur (110) ;
le premier modèle (150) s'exécute sur le matériel de traitement de données (310) ; et
le second modèle (160) s'exécute sur un système informatique distant (120) en communication avec le matériel de traitement de données (310) ; soit,
dans lequel :
le matériel de traitement de données (310) réside sur un système informatique distant (120) en communication avec le dispositif utilisateur (110) ; et
le premier modèle (150) et le second modèle (160) s'exécutent tous deux sur le matériel de traitement de données (310).

4. Procédé mis en œuvre par ordinateur (200) selon l'une quelconque des revendications 1 à 3, dans lequel le second modèle (160) est entraîné sur des transcriptions d'entraînement, chaque transcription d'entraînement (142) étant associée à une partie de réponse initiale d'entraînement correspondante pour conditionner le second modèle (160) à apprendre comment générer une réponse (102) à la transcription d'entraînement (142) qui incorpore la partie de réponse initiale d'entraînement correspondante.

5. Procédé mis en œuvre par ordinateur (200) selon l'une quelconque des revendications 1 à 4, dans lequel le premier modèle (150) est entraîné à générer le premier segment de texte (172) d'un ou plusieurs mots initiaux dans la réponse (102) à la transcription (142) de telle sorte que la première représentation vocale synthétisée (174) générée à partir des un ou plusieurs mots initiaux comporte une durée suffisante pour masquer une période de latence survenant pendant que le second modèle (160) traite la transcription (142) et le premier segment de texte (172) pour générer le second segment de texte (172) ; et, éventuellement,
dans lequel les un ou plusieurs mots initiaux représentent au moins l'une d'une expression générique, d'une expression de remplissage ou d'une expression préfixe.

6. Procédé mis en œuvre par ordinateur (200) selon l'une quelconque des revendications 1 à 5, dans lequel le premier modèle (150) comprend un modèle de classification configuré pour sélectionner, sur la base de la transcription (142), le premier segment de texte (172) parmi une pluralité de segments de texte (172) prédéterminés ; et/ou,
dans lequel :
le premier modèle (150) comprend un premier LLM ; et
le LLM du second modèle (160) comprend un second LLM ayant un plus grand nombre de paramètres que le premier LLM.

7. Procédé mis en œuvre par ordinateur (200) selon l'une quelconque des revendications 1 à 6, dans lequel le premier modèle (150) comprend un modèle d'intégration configuré pour projeter la transcription (142) dans un espace d'intégration correspondant à une pluralité de premiers segments de texte (172) prédéterminés ; et/ou,
dans lequel la fourniture, pour sortie audible depuis le dispositif utilisateur (110), de la seconde représentation vocale synthétisée (174) comprend l'arrêt de la fourniture, pour sortie audible par le dispositif utilisateur (110), d'une partie restante de la première représentation vocale synthétisée (174).

8. Système (100) comprenant :
un matériel de traitement de données (310) ; et
un matériel de mémoire (320) en communication avec le matériel de traitement de données (310) et stockant des instructions qui, lorsqu'elles sont exécutées sur le matériel de traitement de données (310), amènent le matériel de traitement de données (310) à réaliser un procédé comprenant :
la réception d'une transcription (142) d'un énoncé (101) prononcé par un utilisateur d'un dispositif utilisateur (110) ; le traitement, à l'aide d'un premier modèle (150), de la transcription (142) pour générer un premier segment de texte (172) qui représente une partie initiale d'une réponse (102) à l'énoncé (101) ;
le traitement, à l'aide d'un système de synthèse vocale (170), du premier segment de texte (172) pour générer une première représentation vocale synthétisée (174) de la partie initiale de la réponse (102) à l'énoncé (101) ;
la fourniture, pour sortie audible par le dispositif utilisateur (110), de la première représentation vocale synthétisée (174) ; la fourniture, à un second modèle (160) différent du premier modèle (150), de la transcription (142) et du premier segment de texte (172), le second modèle (160) comprenant un grand modèle de langage (LLM) configuré pour traiter la transcription (142) et le premier segment de texte (172) pour générer un second segment de texte (172) qui représente une partie restante de la réponse (102) à l'énoncé (101) ;
l'obtention d'une seconde représentation vocale synthétisée (174) générée à partir du second segment de texte (172), la seconde représentation vocale synthétisée (174) représentant la partie restante de la réponse (102) à l'énoncé (101) ; et
la fourniture, pour sortie audible depuis le dispositif utilisateur (110), de la seconde représentation vocale synthétisée (174) ; et,
dans lequel la première représentation vocale synthétisée (174) est fournie pour sortie audible pendant qu'au moins l'une des actions suivantes est effectuée : la fourniture de la transcription (142) et du premier segment de texte (172) au second modèle (160) ou l'obtention de la seconde représentation vocale synthétisée (174).

9. Système (100) selon la revendication 8, dans lequel les opérations comprennent en outre :
la réception de données audio (116) caractérisant l'énoncé (101), les données audio (116) étant capturées par le dispositif utilisateur (110) ; et
le traitement, à l'aide d'un système de reconnaissance vocale automatique, des données audio (116) pour générer la transcription (142).

10. Système (100) selon la revendication 8 ou 9, dans lequel soit :
le matériel de traitement de données (310) réside sur le dispositif utilisateur (110) ;
le premier modèle (150) s'exécute sur le matériel de traitement de données (310) ; et
le second modèle (160) s'exécute sur un système informatique distant (120) en communication avec le matériel de traitement de données (310) ; soit,
dans lequel :
le matériel de traitement de données (310) réside sur un système informatique distant (120) en communication avec le matériel de traitement de données (310) ; et
le premier modèle (150) et le second modèle (160) s'exécutent tous deux sur le matériel de traitement de données (310).

11. Système (100) selon l'une quelconque des revendications 8 à 10, dans lequel le second modèle (160) est entraîné sur des transcriptions d'entraînement, chaque transcription d'entraînement (142) étant associée à une partie de réponse initiale d'entraînement correspondante pour conditionner le second modèle (160) à apprendre comment générer une réponse (102) à la transcription d'entraînement (142) qui incorpore la partie de réponse initiale d'entraînement correspondante.

12. Système (100) selon l'une quelconque des revendications 8 à 11, dans lequel le premier modèle (150) est entraîné à générer le premier segment de texte (172) d'un ou plusieurs mots initiaux dans la réponse (102) à la transcription (142) de telle sorte que la première représentation vocale synthétisée (174) générée à partir des un ou plusieurs mots initiaux comporte une durée suffisante pour masquer une période de latence survenant pendant que le second modèle (160) traite la transcription (142) et le premier segment de texte (172) pour générer le second segment de texte (172) ; et, éventuellement,
dans lequel les un ou plusieurs mots initiaux représentent au moins l'une d'une expression générique, d'une expression de remplissage ou d'une expression préfixe.

13. Système (100) selon l'une quelconque des revendications 8 à 12, dans lequel le premier modèle (150) comprend un modèle de classification configuré pour sélectionner, sur la base de la transcription (142), le premier segment de texte (172) parmi une pluralité de segments de texte (172) prédéterminés ; et/ou, dans lequel :
le premier modèle (150) comprend un premier LLM ; et
le LLM du second modèle (160) comprend un second LLM ayant un plus grand nombre de paramètres que le premier LLM.

14. Système (100) selon l'une quelconque des revendications 8 à 13, dans lequel le premier modèle (150) comprend un modèle d'intégration configuré pour projeter la transcription (142) dans un espace d'intégration correspondant à une pluralité de premiers segments de texte (172) prédéterminés.

15. Système (100) selon l'une quelconque des revendications 8 à 14, dans lequel la fourniture, pour sortie audible par le dispositif utilisateur (110), de la seconde représentation vocale synthétisée (174) comprend l'arrêt de la fourniture, pour sortie audible par le dispositif utilisateur (110), d'une partie restante de la première représentation vocale synthétisée (174).
